# EUROPÄISCHE PATENTANMELDUNG

(11) **EP 4 491 930 A1**
(43) Veröffentlichungstag der Anmeldung: **15.01.2025**
(21) Anmeldenummer: 23184628.8
(22) Anmeldetag: 11.07.2023
(51) Int. Cl.: F16N 9/02, F03D 15/10, F03D 80/70, F16H 1/46, F16H 57/04

(54) **FLUIDUBERGABEEINRICHTUNG ZUR UBERTRAGUNG EINES SCHMIERMITTELS**

(71) Anmelder: Flender GmbH, 46395 Bocholt (DE)
(72) Erfinder: NAFE, Michael, 46395 Bocholt (DE); THELING, Julian, 46395 Bocholt (DE)
(74) Vertreter: Michalski Hüttermann & Partner Patentanwälte mbB

(57) **Zusammenfassung**

Es ist eine Fluidübergabeeinrichtung (26) zur Übertragung eines Schmiermittels vorgesehen mit einem ersten Bauteil (28), einem relativ zu dem ersten Bauteil (28) drehbaren zweiten Bauteil (30), einem an einer zum zweiten Bauteil (30) weisenden Stirnseite (34) des ersten Bauteils (28) ausgebildeten Ringkammer (32) zur Aufnahme des Schmiermittels, mindestens einem mit dem zweiten Bauteil (30) verbundenen und in die Ringkammer (32) axial eintauchenden Hohlstift (38) zur fluidischen Kommunikation zwischen der Ringkammer (32) und einem Fluidkanal (36) des zweiten Bauteils (30), und einer mit dem ersten Bauteil (28) verbundenen Abdeckung (46) zum verliersicheren Zurückhalten des Hohlstifts (38) in der Ringkammer (32), wobei die Abdeckung (46) eine erste Gleitlagerfläche (66) ausbildet und der Hohlstift (38) über eine zweite Gleitlagerfläche (68) an der ersten Gleitlagerfläche (66) axial abgestützt ist. Durch den in die Ringkammer (32) eintauchenden Hohlstift (38) und die axial beabstandete Abdichtung an der ersten Gleitlagerfläche (66) kann auch bei Einbautoleranzen eine gute und langlebige Abdichtung der Ringkammer (32) erfolgen, so dass eine wartungsarme und/oder leckagearme Fluidübergabe zwischen relativ zueinander drehenden Bauteilen (28, 30) ermöglicht ist.

## Beschreibung

Die Erfindung betrifft eine Fluidübergabeeinrichtung, mit deren Hilfe ein Schmiermittel, insbesondere innerhalb eines Windkraftgetriebes für eine industrielle Windkraftanlage, zwischen relativ zueinander drehbaren Bauteilen übergeben werden kann.

Aus WO 2006/053940 A1 ist es bekannt mit Hilfe eines vorgespannten Flansches eine mit einem Schmiermittel gefüllte Ringkammer auszubilden, wobei der vorgespannte Flansch gegen eine Gleitlagerfläche drückt, in der in dem Radiusbereich der Ringkammer Öffnungen von Fluidkanälen ausgebildet sind, so dass innerhalb eines Planetengetriebes eine axiale Schmiermittelübergabe aus der Ringkammer in die Fluidkanäle erfolgen kann.

Es besteht ein ständiges Bedürfnis eine Fluidübergabe zwischen relativ zueinander drehenden Bauteilen möglichst wartungsarm auszuführen.

Es ist die Aufgabe der Erfindung Maßnahmen aufzuzeigen, die eine wartungsarme Fluidübergabe zwischen relativ zueinander drehenden Bauteilen ermöglichen. Vorzugsweise ist es die Aufgabe der Erfindung Maßnahmen aufzuzeigen, die eine hohe Effektivität der Fluidübergabe bei geringen Leckageverlusten ermöglichen.

Die Lösung der Aufgabe erfolgt durch eine Fluidübergabeeinrichtung mit den Merkmalen des Anspruchs 1, ein Windkraftgetriebes mit den Merkmalen des Anspruchs 13, einen Antriebsstrang mit den Merkmalen des Anspruchs 14, sowie ein Datenagglomerat mit den Merkmalen des Anspruchs 15. Bevorzugte Ausgestaltungen sind in den Unteransprüchen und der nachfolgenden Beschreibung angegeben, die jeweils einzeln oder in Kombination einen Aspekt der Erfindung darstellen können, wobei der Schutzbereich durch die Ansprüche bestimmt wird. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft eine Fluidübergabeeinrichtung zur Übertragung eines Schmiermittels, insbesondere innerhalb eines Windkraftgetriebes für eine industrielle Windkraftanlage, mit einem ersten Bauteil, einem relativ zu dem ersten Bauteil drehbaren zweiten Bauteil, einem an einer zum zweiten Bauteil weisenden Stirnseite des ersten Bauteils ausgebildeten Ringkammer zur Aufnahme des Schmiermittels, mindestens einem mit dem zweiten Bauteil verbundenen und in die Ringkammer axial eintauchenden Hohlstift zur fluidischen Kommunikation zwischen der Ringkammer und einem Fluidkanal des zweiten Bauteils, und einer mit dem ersten Bauteil verbundenen Abdeckung zum verliersicheren Zurückhalten des Hohlstifts in der Ringkammer, wobei die Abdeckung eine erste Gleitlagerfläche ausbildet und der Hohlstift über eine zweite Gleitlagerfläche an der ersten Gleitlagerfläche axial abgestützt ist.

Da die Übergabe des Schmierstoffs zwischen den relativ zueinander drehenden Bauteilen in axialer Richtung und nicht in radialer Richtung erfolgt, ist es leicht möglich die Fluidübergabe des Schmierstoffs auf einem besonders großen Durchmesser vorzusehen. Insbesondere wenn die Fluidübergabeeinrichtung in einem Windkraftgetriebes für eine industrielle Windkraftanlage eingesetzt werden soll, erleichtert es das Windkraftgetriebe besonders groß auszugestalten und für besonders große Leistungsbereiche zu dimensionieren, wie sie beispielsweise bei Offshore-Windkraftanlagen bei hohen Windstärken auftreten können. Ein Scale-up des Windkraftgetriebes mit einer derartigen Fluidübergabeeinrichtung auf immer größere Leistungsklassen ist dadurch vereinfacht oder sogar erst ermöglicht.

Bei der Fluidübergabeeinrichtung kann die Ringkammer in dem ersten Bauteil versenkt ausgebildet sein. Bezogen zu der zum zweiten Bauteil weisenden Stirnseite des ersten Bauteils kann die Ringkammer vollständig in einem von der Stirnseite in einem von dem zweiten Bauteil weg weisenden Axialbereich des ersten Bauteils ausgebildet sein. Die Ringkammer kann beispielsweise einen im Wesentlichen U-förmigen Querschnitt aufweisen, der insbesondere in Umfangsrichtung im Wesentlichen konstant ausgeformt ist, und in der Ebene der Stirnseite des ersten Bauteils zum zweiten Bauteil hin geöffnet ausgeformt ist. Eine in oder an dem ersten Bauteil vorgesehene Fluidleitung kann in die Ringkammer einmünden, um Schmiermittel zuzuführen und/oder abzuführen. Da der mit dem zweiten Bauteil verbundene, insbesondere verschraubte Hohlstift in die Ringkammer hineinragt, kann eine Mündungsöffnung des Hohlstifts zu der Stirnseite des ersten Bauteils axial in das erste Bauteil hinein versetzt positioniert sein. Die Fluidübergabe des Schmierstoffs zwischen dem Ringkanal und dem relativ in Umfangsrichtung bewegten Hohlstift kann dadurch innerhalb des ersten Bauteils erfolgen und muss nicht in einem Zwischenraum zwischen dem ersten Bauteil und dem zweiten Bauteil vorgesehen werden. Dadurch kann Bauraumbedarf eingespart werden. Zudem kann die Fluidübergabe des Schmierstoffs zwischen dem Ringkanal und dem Hohlstift von abzudichtenden Trennflächen zwischen den relativ zueinander drehbaren Bauteilen deutlich beabstandet werden, wodurch es wesentlich einfacher ist eine verlässliche und lang andauernde Abdichtung zwischen dem ersten Bauteil und dem zweiten Bauteil herbeizuführen.

Nachdem der in die Ringkammer eintauchende Hohlstift montiert wurde, kann die Abdeckung mit dem ersten Bauteil befestigt werden. Beispielsweise kann der Hohlstift einen bezogen auf die Längsachse des Hohlstifts nach radial außen abstehenden Kragen aufweisen, der nach der Montage der Abdeckung an der Abdeckung unmittelbar oder mittelbar anschlagen könnte. Dadurch ist nach der Montage der Abdeckung ein verliersicheres Zurückhalten des Hohlstifts im in der Ringkammer eingetauschten Zustand sichergestellt. Gleichzeitig kann die Abdeckung in einem Radiusbereich, der einen von der Ringkammer eingenommenen Radiusbereich überdeckt, die erste Gleitlagerfläche ausbilden. Die erste Gleitfläche kann dadurch sowohl die Funktion ausüben zusammen mit der zweiten Gleitlagerfläche ein Axialgleitlager auszubilden als auch die Funktion übernehmen einen Teil der Ringkammer zu begrenzen. Hierbei wird die Erkenntnis ausgenutzt, dass die Erstreckung der ersten Gleitlagerfläche in radialer Richtung leicht über die radiale Erstreckung der Ringkammer eingestellt werden kann, so dass es besonders einfach ist über eine großzügig und/oder groß dimensionierte Ringkammer eine möglichst große erste Gleitlagerfläche auszubilden, was gleichzeitig zu einem guten Abdichtungseffekt innerhalb des von der ersten Gleitlagerfläche und der zweiten Gleitlagerfläche ausgebildeten Axialgleitlagers und geringen durch Strömungsverluste verursachten Druckverlusten innerhalb der Fluidübergabeeinrichtung führt. Das Ausmaß an viskoser Reibung innerhalb der Ringkammer kann reduziert werden. Die an der ersten Gleitlagerfläche abgleitbare zweite Gleitlagerfläche kann prinzipiell von dem Hohlstift, insbesondere einen von dem Hohlstift nach außen abstehenden Kragen ausgebildet werden, so dass ein direkter Kontakt zwischen der Abdeckung und dem Hohlstift zur Ausbildung des Axialgleitlagers vorgesehen sein kann. Es ist aber vorzugsweise ebenfalls möglich die axiale Erstreckung des Hohlstift innerhalb der Ringkammer auszunutzen, indem die axiale Abstützung des Hohlstifts an der ersten Gleitlagerfläche der Abdeckung nur mittelbar über ein weiteres Bauteil bereitgestellt wird, so dass eine automatische Ausrichtung der aneinander anliegenden Gleitlagerflächen auch bei einer Winkelabweichung und/oder einem Versatz in Radialrichtung des Hohlstifts zu einer Hauptdrehachse des ersten und/oder zweiten Bauteils erfolgen kann und eine gute Abdichtung in dem Axialgleitlager auch bei Einbautoleranzen sichergestellt werden kann. Eine Leckage von Schmiermittel, insbesondere durch das Axialgleitlager hindurch, kann dadurch leicht minimiert werden.

Durch den in die Ringkammer eintauchenden Hohlstift und die axial beabstandete Abdichtung an der ersten Gleitlagerfläche kann auch bei Einbautoleranzen eine gute und langlebige Abdichtung der Ringkammer erfolgen, so dass eine wartungsarme und/oder leckagearme Fluidübergabe zwischen relativ zueinander drehenden Bauteilen ermöglicht ist.

Die Fluidübergabeeinrichtung kann prinzipiell für alle Schmieranordnungen verwendet werden, bei denen einen Übergabe zwischen relativ zueinander drehenden Bauteilen in axialer Richtung erfolgen soll. Insbesondere ist die Fluidübergabeeinrichtung dort vorgesehen, wo eine Fluidübergabe des Schmierstoffs auf einem großen Radius erfolgen kann und/oder in der Nähe der Hauptdrehachse kein ausreichender Bauraum und/oder keine ausreichende Zugänglichkeit vorhanden ist. Die Fluidübergabeeinrichtung eignet sich vorzugsweise für eine Druckschmierung, insbesondere von Lagerstellen und/oder Zahnradeingriffen, in einem Windkraftgetriebe, das für eine industrielle Windkraftanlage verwendet werden soll.

Industrielle Windkraftanlagen sind vornehmlich zur Energieerzeugung aus Windkraft ausgestaltet, wobei aus der Windkraft gewonnene elektrische Energie insbesondere in ein öffentliches Stromnetz eingeleitet werden kann, um Energieverbraucher mit regenerativ erzeugter Energie versorgen zu können. Ein für eine industrielle Windkraftanlage ausgestaltetes Windkraftgetriebe ist insbesondere für eine Leistung über 1,0 MW, vorzugsweise über 5,0 MW und besonders bevorzugt über 7,5 MW ausgelegt und entsprechend robust und großvolumig ausgestaltet.

Das Schmiermittel, das in der Fluidübergabeeinrichtung übergeben werden soll, ist insbesondere ein Schmieröl, wobei prinzipiell auch andere Fluide, insbesondere Flüssigkeiten, Suspensionen oder Emulsionen, mit der Fluidübergabeeinrichtung übergeben werden können. Zusätzlich oder alternativ kann das Schmiermittel auch eine Kühlfunktion übernehmen, so dass Schmiermittel auch ein Kühlmittel sein kann.

Das erste Bauteil und/oder das zweite Bauteil kann als rotierendes Bauteil ausgestaltet sein, wobei das jeweils andere Bauteil ein unbeweglich feststehendes Bauteil oder ein mit einer anderen Drehzahl drehbares Bauteil sein kann. Jedenfalls kann im bestimmungsgemäßen Betrieb eine Relativdrehzahl zwischen dem ersten Bauteil und dem zweiten Bauteil auftreten. Das erste und/oder zweite Bauteil kann beispielsweise Teil eines Getriebes, insbesondere Windkraftgetriebes, sein, so dass mit Hilfe der Fluidübergabeeinrichtung Lagerstellen des Getriebes geschmiert werden können. Hierbei kann das erste und/oder zweite Bauteil beispielsweise ein Planetenträger eines Planetengetriebes sein. Das jeweils andere Bauteil kann beispielsweise Teil einer weiteren Getriebestufe oder Teil eines feststehenden Gehäuses des Getriebes sein.

Die Stirnseite des ersten Bauteils liegt insbesondere in einer senkrecht zu einer Hauptdrehachse des ersten Bauteils und/oder des zweiten Bauteils, die vorzugsweise mit einer in Längsrichtung verlaufenden Mittellinie des ersten Bauteils und/oder des zweiten Bauteils zusammenfällt, aufgespannten Radialebene. Vorzugsweise bildet die Stirnseite abgesehen von der mit dem ersten Bauteil befestigten Abdeckung einen zum zweiten Bauteil hin weisenden axialen Abschluss des ersten Bauteils in einem von dem zweiten Bauteil eingenommenen Radiusbereich. Die Stirnseite kann insbesondere eine Flanschseite des ersten Bauteils ausbilden, mit deren Hilfe die Abdeckung an dem ersten Bauteil angeflanscht werden kann.

Der Hohlstift kann dazu ausgeformt sein eine fluidische Verbindung zwischen dem ersten Bauteil und dem zweiten Bauteil über einen in dem Hohlstift ausgebildeten Hohlraum herbeizuführen. Der Hohlstift kann an einem Ende mit seiner Mündungsöffnung in die Ringkammer eintauchen und an seinem anderen Ende mit einem zu einer Schmierstelle führenden Fluidkanal fuidisch verbunden sein. Alternativ kann der Hohlstift auch in einen Ringkanal des zweiten Bauteils münden, wobei der Ringkanal bereits ein Teil des Fluidkanals sein kann. Der Hohlstift kann hierzu eine in der Art eines Hohlzylinders ausgebildeten Innenraum aufweisen. Vorzugsweise ist der Hohlstift dazu ausgelegt auch in tangentialer Richtung auftretende Kräfte übertragen zu können ohne hierbei abgeschert zu werden, so dass der Hohlstift beispielsweise durch viskose Reibung aufgeprägte Drehmomente an dem zweiten Bauteil und/oder an der ersten Gleitlagerfläche der Abdeckung abstützen kann. Der Hohlstift kann relativ zu dem ersten Bauteil axial beweglich ausgeführt sein, wobei auch die kinematische Umkehr möglich ist, bei welcher der Hohlstift axial beweglich zu dem zweiten Bauteil ausgeführt ist.

Die Abdeckung kann insbesondere als ringförmiger Deckel ausgestaltet sein, wobei auch mehrere in Umfangsrichtung einander nachfolgende Abdeckungssegmente vorgesehen sein können. Die Abdeckung kann an der zur Ringkammer weisenden Axialseite zumindest im Bereich der ersten Gleitlagerfläche mit einem Gleitlagermaterial, beispielsweise Bronze, insbesondere durch Beschichten oder additive Fertigung, versehen sein.

Die erste Gleitlagerfläche und die zweite Gleitlagerfläche können aneinander anliegen, vorzugsweise aneinander angepresst sein, um ein Axialgleitlager auszubilden. Das so ausgebildete Axialgleitlager ist insbesondere zusätzlich für eine Abdichtfunktion ausgelegt, beispielsweise indem die radiale Erstreckung der ersten Gleitlagerfläche und der zweiten Gleitlagerfläche größer dimensioniert sind als es für die Abstützung der zu erwartenden Axialkräfte erforderlich wäre. Eine Leckage von Schmiermittel an dem Axialgleitlager kann dadurch minimiert und ein Wartungsintervall, beispielsweise zum Nachfüllen von Schmiermittel, deutlich verlängert werden, wodurch die Fluidübergabeeinrichtung besonders wartungsarm ausgeführt ist und/oder ein Verschleiß minimiert werden kann. Zudem kann das so ausgebildete Axialgleitlager im Vergleich zu einer Spaltdichtung verhindern, dass Partikel oder sonstige Verschmutzungen in die Ringkammer eindringen können. Eine Beschädigung einer mit Hilfe des Schmiermittels geschmierten Lagerstelle, insbesondere Gleitlager, durch mitgeführte Verunreinigungen kann dadurch vermieden, wodurch wiederum die Fluidübergabeeinrichtung besonders wartungsarm ausgeführt ist.

Insbesondere ist die zweite Gleitlagerfläche von einem axial relativ zum Hohlstift beweglichen Stützring ausgebildet, wobei vorzugsweise der Stützring über ein Federelement mit dem Hohlstift gekoppelt ist. Alternativ kann der Hohlstift mit dem Stützring unbeweglich verbunden sein und innerhalb eines Fluidkanals des zweiten Bauteils axial relativ beweglich ausgeführt sein, wobei insbesondere das Federelement in dem zweiten Bauteil, vorzugsweise in dem Fluidkanal, vorgesehen ist. Der Hohlstift kann durch seine Befestigung mit dem zweiten Bauteil in seiner axialen Relativlage festgelegt sein. Für die Funktionsfähigkeit der Fluidübergabeeinrichtung ist es ausreichend, dass der Hohlstift in die Ringkammer eintaucht, wobei ein axialer Versatz und/oder ein Winkelversatz des Hohlstifts relativ zur Ringkammer zugelassen werden kann, ohne die Übergabe des Schmiermittels zwischen der Ringkammer und dem Hohlstift zu beeinträchtigen. Um ein ausreichend dichtes Axialgleitlager auszubilden, wird jedoch nicht der Hohlstift unmittelbar gegen die erste Gleitlagerfläche der Abdeckung gedrückt, sondern es findet eine mittelbare Abstützung des Hohlstifts an der Abdeckung über den Stützring statt. Der Stützring kann mit Hilfe des Federelements auf die erste Gleitlagerfläche zugezogen oder zugedrückt werden, um eine abdichtende Anpresskraft zwischen der ersten Gleitlagerfläche der Abdeckung und der von dem Stützring ausgebildeten zweiten Gleitlagerfläche aufbringen zu können. Hierbei kann sich der Stützring, insbesondere über das Federelement an dem Hohlstift abstützen. Der Hohlstift kann relativ beweglich durch den Stützring hindurchgeführt sein, um in die Ringkammer einzutauchen. Der Stützring kann sich an einem in der Ringkammer eingetauchten Teil des Hohlstifts über das Federelement abstützen und mit einer Federvorspannung des Federelements gegen die Abdeckung gepresst werden. Ein Zwischenraum der Abdeckung kann mit Hilfe des Stützrings geschlossen und gegenüber der Abdeckung abgedichtet werden. Eine zum zweiten Bauteil weisende Öffnung der Ringkammer kann zu einem Teil durch die Abdeckung und zu einem anderen Teil durch den Stützring zu einem Großteil abgedeckt sein, wobei der mindestens eine Hohlstift eine fluidische Kommunikation durch den Stützring hindurch absichtlich bereitstellt. Der Stützring kann dadurch einen Anteil an der Abdichtung der Ringkammer leisten. Wenn sich der Innendruck in der Ringkammer erhöhen sollte, kann das Schmiermittel innerhalb der Ringkammer mit dem erhöhten Innendruck gegen eine von dem zweiten Bauteil weg weisenden Rückseite des Stützrings drücken, wodurch sich die Anpresskraft des Stützrings an der Abdeckung erhöht. Durch den mit Hilfe des Federelements vorgespannten und relativ zu dem Hohlstift axial beweglichen Stützring ist eine selbstverstärkende Abdichtung in dem durch die erste Gleitlagerfläche der Abdeckung und die zweite Gleitlagerfläche des Stützrings ausgebildeten Axialgleitlager erreicht, wodurch aufgrund der guten Abdichtung der Ringkammer eine besonders verlustarme Fluidübergabe realisiert ist.

Das Federelement kann insbesondere als eine Schraubenfeder ausgestaltet sein, die als Druckfeder oder Zugfeder den Stützring relativ zum Hohlstift mit einer Federkraft vorspannen kann, um einen ausreichend dichten Anpressdruck zwischen der ersten Gleitlagerfläche der Abdeckung und der zweiten Gleitlagerfläche des Stützrings bereitstellen zu können. Das Federelement kann beispielsweise aus einem Federstahl hergestellt sein. Prinzipiell ist es aber auch möglich das Federelement aus einem elastomeren und/oder gummielastischen Material herzustellen und/oder als einen komprimierbaren massiven Block auszugestalten. Alternativ kann die Anpresskraft federlos durch einen separaten hydraulischen Druck mittels Zylinder und/oder durch die Gewichtskraft aus der Masse des Stützrings bereitgestellt werden.

Vorzugsweise ist zwischen dem Stützring und dem Hohlstift eine von dem Stützring und dem Hohlstift verkapselte Aufnahmekammer ausgebildet, wobei insbesondere das Federelement zumindest zu einem Großteil in der Aufnahmekammer aufgenommen ist, wobei insbesondere die Aufnahmekammer gegenüber dem Schmiermittel in der Ringkammer abgedichtet ist. Beispielsweise kann der Stützring bei seiner axialen Relativbewegung an dem Hohlstift abgleiten. Eine zwischen dem Stützring und dem Hohlstift vorgesehene Passung kann so eng gewählt sein, dass das Schmiermittel aufgrund seiner eher hohen Viskosität die Passung nicht passieren kann. In einer bevorzugten Ausführungsform ist zwischen dem Hohlstift und dem Stützring ein Spiel ausgebildet, insbesondere damit der Stützring sich an der Abdeckung ausrichten kann. Dadurch kann sowohl der Hohlstift als auch der Stützring in einem vordefinierten Ausmaß beweglich bleiben, wodurch Winkelversätze leicht ausgeglichen werden können, ohne die Dichtwirkung des Axialgleitlagers zu beeinträchtigen. Insbesondere ist zwischen dem Stützring und dem Hohlstift eine Spaltdichtung ausgebildet. Dies ermöglicht es zwischen dem Stützring und dem Hohlstift einen Freiraum auszubilden, der die Aufnahmekammer für das Federelement bereitstellt. Bei einem Federbruch des Federelements können die Bruchstücke in der Aufnahmekammer zurückgehalten werden, so dass die Bruchstücke nicht mit dem Schmiermittel ausgespült und zusammen mit dem Schmiermittel an Stellen gelangen können, an denen die Bruchstücke Beschädigungen an Komponenten des Getriebes verursachen können.

Besonders bevorzugt weist der Stützring eine Durchgangsöffnung für zumindest einen Teil des Hohlstifts auf, wobei zwischen dem Stützring und dem Hohlstift mindestens ein axial verlaufender Ringspalt, vorzugsweise mindestens zwei axial zueinander beabstandete Ringspalte, ausgebildet ist, wobei insbesondere der Ringspalt dimensioniert ist, eine Winkelabweichung Δα des Hohlstifts zuzulassen, wobei insbesondere 0,01° ≤ Δα ≤ 2,0°, vorzugsweise 0,02° ≤ Δα ≤ 1,0° und besonders bevorzugt 0,05° ≤ Δα ≤ 0,5° gilt. Der mit dem Federelement vorgespannte Stützring kann sich an der ersten Gleitlagerfläche der Abdeckung automatisch ausrichten, so dass die erste Gleitlagerfläche der Abdeckung und die zweite Gleitlagerfläche des Stützrings flächig aneinander liegen. Hierbei kann der mindestens eine Ringspalt zwischen dem Stützring und dem Hohlstift so groß dimensioniert sein, dass ein begrenztes Verkippen des Hohlstifts relativ zum Stützring zugelassen werden kann. Vorzugsweise ist der Ringspalt gleichzeitig so klein dimensioniert, dass aufgrund der Viskosität des Schmiermittels, insbesondere Schmieröl, das Schmiermittel den Ringspalt nicht passieren kann. Durch den geeignet dimensionierten Schmierspalt kann berücksichtigt werden, dass aufgrund von Einbautoleranzen eine Winkelabweichung des zweiten Bauteils relativ zum ersten Bauteil auftreten kann, die sich in der Relativlage des Hohlstifts zum ersten Bauteil, der Abdeckung und/oder dem Stützring fortsetzt. Ein Verklemmen und/oder eine Beschädigung des Hohlstifts innerhalb der Durchgangsöffnung des Stützrings kann dadurch vermieden werden.

Insbesondere ist der Hohlstift über eine in radialer Richtung elastisch verformbare Ringdichtung oder Membran an dem Stützring abgedichtet. Vorzugsweise ist in zumindest einem Ringspalt zwischen dem Stützring und dem Hohlstift die Ringdichtung vorgesehen. Wenn zwei oder mehr Ringspalte vorgesehen sind, ist es möglich, dass die Ringdichtung in allen Ringspalten oder nur in einem Teil der Ringspalte, insbesondere nur in genau einem Ringspalt, vorgesehen ist. Durch die Ringdichtung oder die Membran kann eine ausreichende Abdichtung des Ringkanals erreicht werden, um eine Leckage von Schmiermittel zwischen dem Stützring und dem Hohlstift durch die Durchgangsöffnung des Stützrings hindurch zu vermeiden. Die Membran kann ausgelegt sein, die zu erwartenden Relativbewegungen aufnehmen zu können. Dies ermöglicht es eine besonders große Winkelabweichung des Hohlstifts relativ zum Stützring und zum ersten Bauteil zuzulassen, ohne eine Leckage riskieren zu müssen, da die Ringdichtung hierzu in Umfangsrichtung betrachtet leicht unterschiedlich stark komprimiert sein kann, ohne ihre Dichtwirkung zu verlieren.

Vorzugsweise ist der Stützring aus mehreren in Umfangsrichtung einander nachfolgenden Stützringsegmenten zusammengesetzt, wobei insbesondere die Stützringsegmente an ihren aufeinander zu weisenden Tangentialseiten eine Dichtspaltschikane, insbesondere Labyrinthdichtung, ausbilden. Das jeweilige Stützringsegment kann insbesondere einen Teilkreis abdeckenden. Durch den segmentierten Aufbau des Stützrings ist die Herstellung des Stützrings bei geringeren Herstellungskosten vereinfacht. An den Verbindungsstellen der Stützringsegmenten kann eine Abdichtung, beispielsweise in Form eines flächigen Abdeckungselements vorgesehen sein. Das Abdeckungselement kann beispielsweise einen tangentialen Stoß zwischen zwei in Umfangsrichtung einander nachfolgenden Stützringsegmenten U-förmig umgreifen, wodurch sich zwischen dem tangentialen Stoß der Stützringsegmente und dem Abdeckungselement eine T-förmige Fuge ergibt, die gegenüber dem tangentialen Stoß zwischen den Stützringsegmenten eine verbesserte Dichtwirkung bereitstellt. Vorzugsweise ist durch eine nicht-ebene Ausgestaltung der Tangentialseiten ein möglicher Leckagepfad bewusst verlängert. Eine zwischen den Tangentialseiten durch eine verbliebene Fuge ausgebildete Spaltdichtung kann dadurch in ihrer Dichtwirkung verbessert werden. Die so ausgebildete Dichtspaltschikane kann die Funktion einer Labyrinthdichtung erfüllen. Trotz des segmentierten Aufbaus des Stützrings ist eine Beeinträchtigung der Dichtfunktion vermieden oder zumindest reduziert.

Besonders bevorzugt ist der Stützring über mindestens ein Befestigungselement, insbesondere einem der Außenkontur des Hohlstifts entsprechenden Entlastungsstift, mit dem zweiten Bauteil befestigt und/oder translatorisch geführt, wobei insbesondere der Entlastungsstift eine axiale Relativbeweglichkeit zulässt. Im Vergleich zum Hohlstift kann das Befestigungselement massiv, also nicht hohl, ausgestaltet sein, so dass das Befestigungselement im Vergleich zum Hohlstift bei gleichen Außenmaßen ein höhere Last abstützen kann. Vorzugsweise sind der mindestens eine Hohlstift und das mindestens eine Befestigungselement bei im Wesentlichen gleicher Außenkontur in Umfangsrichtung, vorzugsweise alternierend, gleichmäßig verteilt angeordnet. Dadurch ist es nicht erforderlich bei der Montage des Stützrings eine bestimmte Relativlage in Umfangsrichtung einzuhalten, wodurch die Montage vereinfacht ist.

Insbesondere weist die Abdeckung einen inneren Ring und einen äußeren Ring auf, wobei der Hohlstift, insbesondere auch der Entlastungstift, durch einen Zwischenraum zwischen dem inneren Ring und dem äußeren Ring hindurchgeführt ist, wobei insbesondere eine im Zwischenraum verbleibende Durchgangsfläche durch den Stützring verschlossen ist. Die Abdeckung ist dadurch mehrteilig, insbesondere zweiteilig, ausgestaltet. Der Zwischenraum zwischen dem inneren Ring und dem äußeren Ring der Abdeckung erlaubt eine Relativdrehung des Hohlstifts relativ zu dem ersten Bauteil und der mit dem ersten Bauteil verbundenen Abdeckung. Ein Anstoßen des Hohlstifts an der Abdeckung ist dadurch verhindert. Der Zwischenraum zwischen dem inneren Ring und dem äußeren Ring der Abdeckung kann insbesondere mit Hilfe des Stützrings abgedichtet werden. Hierbei ist es nicht erforderlich ein Radiallager und/oder eine Radialdichtung in dem Zwischenraum vorzusehen. Stattdessen kann der vorgespannte und an der von dem inneren Ring und von dem äußeren Ring jeweils teilweise ausgebildeten ersten Gleitlagerfläche angepresste Stützring eine Abdichtung des Zwischenraums bewirken. Der innere Ring kann eine in Umfangsrichtung geschlossene erste innere Gleitfläche und der äußere Ring eine zur ersten inneren Gleitfläche radial versetzte, koaxiale und in Umfangsrichtung geschlossene erste äußere Gleitfläche bereitstellen, die zusammen die erste Gleitlagerfläche der Abdeckung ausbilden. Es ist möglich, dass die äußere Gleitfläche und die innere Gleitfläche komplanar oder axial versetzt angeordnet sind. Hierzu korrespondierend kann der Stützring eine in Umfangsrichtung geschlossene zweite innere Gleitfläche und eine zur zweiten inneren Gleitfläche radial versetzte, koaxiale und in Umfangsrichtung geschlossene zweite äußere Gleitfläche bereitstellen, die zusammen die zweite Gleitlagerfläche ausbilden. Die erste Gleitlagerfläche und die zweite Gleitlagerfläche können über die radiale Erstreckung des Zwischenraums zwischen dem inneren Ring und dem äußeren Ring unterbrochen sein.

Vorzugsweise ist die Abdeckung über ein Befestigungsmittel mit dem ersten Bauteil befestigt, wobei das Befestigungsmittel, insbesondere Schraube, von einer von dem zweiten Bauteil weg weisenden Axialseite durch eine Öffnung des ersten Bauteils hindurch bis zur Abdeckung hindurchgeführt ist. Beispielsweise weist die Abdeckung eine Befestigungsöffnung mit Innengewinde auf. Die Montage der Abdeckung kann dadurch leicht erfolgen, da es nicht erforderlich ist zwischen dem ersten Bauteil und dem zweiten Bauteil einen großen axialen Bauraum vorzuhalten. Stattdessen ist es ausreichend die Abdeckung beziehungsweise den inneren Ring und den äußeren Ring mit einem in radialer Richtung wirkenden Werkzeug zu positionieren und von der von dem zweiten Bauteil weg weisenden Rückseite des ersten Bauteils die Abdeckung zu befestigen, insbesondere verschrauben. Das erste Bauteil kann hierzu geeignete Bohrungen aufweisen, durch die das Befestigungsmittel an die zu befestigende Abdeckung herangeführt werden kann.

Besonders bevorzugt ist vorgesehen, dass die erste Gleitlagerfläche und/oder die zweite Gleitlagerfläche vollständig innerhalb des bis zur Stirnseite des ersten Bauteils reichenden Ringkammer positioniert ist/sind. Das von der ersten Gleitlagerfläche und der zweiten Gleitlagerfläche ausgebildete Axialgleitlager kann zu der Stirnseite versetzt innerhalb des ersten Bauteils, insbesondere innerhalb eines ansonsten von der Ringkammer beanspruchten Volumens, ausgebildet sein. Dies führt zu einem kompakten und bauraumsparenden Aufbau. Zudem ist das Axialgleitlager in einem geschützten Bereich vorgesehen, wo die erste und/oder zweite Gleitlagerfläche bei der Montage eher nicht beschädigt werden kann.

Insbesondere ist die Abdeckung über einer Zentrierfase an der Ringkammer zentriert. Beispielsweise ragt die Abdeckung mit einer an der Zentrierfase abgleitbaren Zentriernase etwas in die Ringkammer hinein und/oder eine an der von der Abdeckung ausgebildeten Zentrierfase abgleitbare Zentriernase des ersten Bauteils ragt in die Abdeckung hinein. Die Montage der Abdeckung ist dadurch vereinfacht und eine Beschädigung der ersten und/oder zweiten Gleitlagerfläche bei der Montage vermieden. Vorzugsweise beginnt die erste Gleitlagerfläche an einem in die Ringkammer axial eintauchenden Ende der Zentriernase und erstreckt sich von der Zentriernase in radialer Richtung.

Vorzugsweise ist zwischen der Abdeckung und der Stirnseite des ersten Bauteils eine Dichtung verpresst. Eine Leckage zwischen der Abdeckung und der Stirnseite kann dadurch vermieden werden. Hierbei kann ausgenutzt werden, dass die Abdeckung flächig an der Stirnseite anliegen kann, so dass es besonders einfach ist eine zwischen der Abdeckung und der Stirnseite verbliebene Fuge abzudichten.

Ein weiterer Aspekt der Erfindung betrifft ein Windkraftgetriebe für eine industrielle Windkraftanlage, mit einer als Planetengetriebe ausgestalteten Getriebestufe und einer Fluidübergabeeinrichtung, die wie vorstehend beschrieben aus- und weitergebildet sein kann, wobei insbesondere das zweite Bauteil der Fluidübergabeeinrichtung durch einen Planetenträger der Getriebestufe und vorzugsweise das erste Bauteil durch ein feststehendes Gehäuse oder ein rotierendes Getriebebauteil, insbesondere weiterer Planetenträger, einer in Kraftflussrichtung nachfolgenden weiteren Getriebestufe ausgebildet ist. Das Windkraftgetriebe kann insbesondere wie vorstehend anhand der Fluidübergabeeinrichtung erläutert aus- und weitergebildet sein. Durch den in die Ringkammer eintauchenden Hohlstift und die axial beabstandete Abdichtung an der ersten Gleitlagerfläche kann auch bei Einbautoleranzen eine gute und langlebige Abdichtung der Ringkammer erfolgen, so dass eine wartungsarme und/oder leckagearme Fluidübergabe zwischen relativ zueinander drehenden Bauteilen des Windkraftgetriebes ermöglicht ist.

Ein weiterer Aspekt der Erfindung betrifft einen Antriebsstrang für eine industrielle Windkraftanlage, mit einem Windkraftgetriebe, das wie vorstehend beschrieben aus- und weitergebildet sein kann, zur Leistungsübertragung entlang eines von einem windkraftgetriebenen Rotor zu einem Generator führenden Kraftfluss und einer Schmieranordnung zum Schmieren von Lagerstellen und/oder Zahneingriffen des Windkraftgetriebes, wobei insbesondere eine Fließrichtung des von der Schmieranordnung über die Fluidübergabeeinrichtung übergebenen Schmierstoffs entgegen der Kraftflussrichtung ausgerichtet ist. Der Antriebsstrang kann insbesondere wie vorstehend anhand der anderen Aspekte erläutert aus- und weitergebildet sein. Durch den in die Ringkammer eintauchenden Hohlstift und die axial beabstandete Abdichtung an der ersten Gleitlagerfläche kann auch bei Einbautoleranzen eine gute und langlebige Abdichtung der Ringkammer erfolgen, so dass eine wartungsarme und/oder leckagearme Fluidübergabe zwischen relativ zueinander drehenden Bauteilen des Antriebsstrangs ermöglicht ist.

Ein weiterer Aspekt betrifft eine Windkraftanlage zur industriellen Erzeugung von Energie aus Windkraft, mit einem Standturm, einer an einem oberen Ende des Standturms angebrachten Gondel, einem windkraftantreibbaren Rotor, einer im Generatorbetrieb betreibbaren elektrischen Maschine und einem von der Gondel aufgenommenen Antriebsstrang, der wie vorstehend beschrieben aus- und weitergebildet sein kann, zur drehmomentübertragenen Koppelung des Rotors mit der elektrischen Maschine und Wandlung eines von dem Rotor eingeleiteten Drehmoments. Die Windkraftanlage kann insbesondere wie vorstehend anhand der anderen Aspekte erläutert aus- und weitergebildet sein. Durch den in die Ringkammer eintauchenden Hohlstift und die axial beabstandete Abdichtung an der ersten Gleitlagerfläche kann auch bei Einbautoleranzen eine gute und langlebige Abdichtung der Ringkammer erfolgen, so dass eine wartungsarme und/oder leckagearme Fluidübergabe zwischen relativ zueinander drehenden Bauteilen der Windkraftanlage ermöglicht ist.

Ein weiterer Aspekt betrifft eine Industrieapplikation. Die Industrie-Applikation kann ein Antriebsmittel aufweisen, das beispielsweise als elektrische Maschine, Brennkraftmaschine, Hydraulikmotor oder windkraftgetriebener Rotor ausgestaltet sein kann. Das Antriebsmittel kann mit einem Getriebe zur Wandlung eines Drehmoments und einer Drehzahl der von dem Antriebsmittel erzeugten Leistung gekoppelt sein, wobei das Getriebe wie vorstehend anhand des Windkraftgetriebes analog erläutert aus- und weitergebildet sein kann. Insbesondere weist die Industrieapplikation eine Fluidübergabeeinrichtung auf, die wie vorstehend beschrieben aus- und weitergebildet sein kann. Das Getriebe der Industrie-Applikation kann wiederum drehmomentübertragend mit einer mechanischen Anwendung gekoppelt sein, in der über das Getriebe eingeleitete mechanische Energie genutzt werden kann. Bei der mechanischen Anwendung handelt es sich beispielsweise um eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse, Schrottpresse, Zerkleinerer für recyclingfähige Materialen aus, gegebenenfalls zuvor getrennten und/oder sortierten, Abfällen oder Ähnliches. Die Industrieapplikation kann insbesondere wie vorstehend anhand der anderen Aspekte erläutert aus- und weitergebildet sein. Durch den in die Ringkammer eintauchenden Hohlstift und die axial beabstandete Abdichtung an der ersten Gleitlagerfläche kann auch bei Einbautoleranzen eine gute und langlebige Abdichtung der Ringkammer erfolgen, so dass eine wartungsarme und/oder leckagearme Fluidübergabe zwischen relativ zueinander drehenden Bauteilen der Industrieapplikation ermöglicht ist.

Ein Aspekt betrifft ferner ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Fluidübergabeeinrichtung, die wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile der Fluidübergabeeinrichtung, insbesondere durch 3D-Druck, und/oder bei einer Verarbeitung durch eine Datenverarbeitungseinrichtung zur Durchführung einer technischen Simulation eine Simulation der Funktionsweise der Fluidübergabeeinrichtung durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen und gegebenenfalls mit an einer real produzierten erfindungsgemäßen Vorrichtung und/oder an einem Prototyp der erfindungsgemäßen Vorrichtung ermittelten Messdaten zu vergleichen. Die Datenpakete des Datenagglomerat sind an die erfindungsgemäße Ausgestaltung der jeweiligen vorstehend beschriebenen erfindungsgemäßen Vorrichtung speziell angepasst, um die erfindungsgemäße Wechselwirkung der Bestandteile der erfindungsgemäßen Vorrichtung bei der Verarbeitung in der Datenverarbeitungseinrichtung adäquat abbilden zu können. Die Datenpakete können insbesondere räumlich verteilt gespeichert sein, aber derart aneinander angepasst sein, dass in dem Fall, dass alle Datenpakete in einer gemeinsamen Datenverarbeitungseinrichtung zusammengeführt sind, das so zusammengesetzte Datenagglomerat alle erforderlichen Daten für eine additive Fertigung und/oder eine technische Simulation mit Hilfe der Datenverarbeitungseinrichtung für die erfindungsgemäße Vorrichtung bereitstellt. Beispielsweise sind die Datenpakete jeweils separate Teile einer Datenbibliothek ("Library"), die zur Ausbildung des Datenagglomerats zusammengeführt und bezüglich ihrer relativen Abmessungen zueinander und/oder absoluten Abmessungen und/oder Werkstoffeigenschaften korrespondierend zu der jeweiligen erfindungsgemäßen Vorrichtung aneinander angepasst sind. Das Datenagglomerat kann in der Art eines sogenannten "digital twin" eine virtuelle Verkörperung der jeweiligen erfindungsgemäßen Vorrichtung darstellen, die eine virtuelle Untersuchung in Form einer Simulation oder eine reale Vergegenständlichung mit Hilfe eines additiven Fertigungsverfahrens ermöglicht. Ein derartiger digitaler Zwilling ist beispielsweise in US 2017/286572 A1 dargestellt, auf dessen Offenbarungsgehalt als Teil der Erfindung hiermit Bezug genommen wird.

Wenn die Datenverarbeitungseinrichtung der Werkzeugmaschine das Datenagglomerat verarbeitet, wird die erfindungsgemäße Vorrichtung hergestellt, so dass nach der Verarbeitung des Datenagglomerats in der Datenverarbeitungseinrichtung die erfindungsgemäße Vorrichtung, zumindest in Form eines Prototyps, erhalten wird. Insbesondere kann jeweils ein Datenpaket einen separat ausgeführten Bestandteil der jeweiligen zugeordneten erfindungsgemäßen Vorrichtung abbilden, so dass die einzelnen Bestandteile in ihrer Relativlage und/oder Relativbeweglichkeit leicht tatsächlich und/oder virtuell zusammengesetzt werden können, um die erfindungswesentlichen Wechselwirkungen zu realisieren. Insbesondere ist es möglich mit Hilfe der jeweiligen Datenpakete die verschiedenen Bestandteile der jeweiligen Vorrichtung separat und gegebenenfalls aus unterschiedlichen Materialen durch additive Fertigung zu erzeugen und nachfolgend zu einem Prototyp der jeweiligen Vorrichtung zusammenzusetzen. Die Aufteilung der Daten des Datenagglomerats auf verschiedene Datenpakete ermöglicht dadurch in einfacher Weise eine sequentielle additive Fertigung von relativ zueinander bewegbaren Bestandteilen der jeweiligen Vorrichtung in Form eines Bausatzes ("Kit of parts"), der dazu hergerichtet ist für die erfindungsgemäße Wechselwirkung der Bestandteile des Prototyps für die Lösung des der Erfindung zu Grunde liegenden Problems nur noch sinnfällig zusammengesetzt zu werden.

Zusätzlich oder alternativ ist es möglich mit Hilfe der Datenpakete des Datenagglomerats in einer virtuellen Umgebung während einer technischen Simulation die einzelnen Bestandteile der jeweiligen Vorrichtung, ihre Wechselwirkungen, den physikalische Zustand und/oder die Veränderung physikalischer Parameter in Abhängigkeit verschiedener Randbedingungen und/oder über die Zeit der zugehörigen erfindungsgemäßen Vorrichtung zu berechnen und/oder vorherzusagen sowie für die Überprüfung, ob die erfindungsgemäße Vorrichtung auf Basis der angenommenen Ausgestaltung und unter Berücksichtigung der angenommen simulierten Einflüsse für den beabsichtigten Einsatzzweck gut genug geeignet ist, weiterzuverwenden. Wenn das Datenagglomerat von einer die Simulationsumgebung abbildenden Datenverarbeitungseinrichtung verarbeitet wird, ist es möglich das Verhalten der erfindungsgemäßen Vorrichtung unter Berücksichtigung von, sich insbesondere verändernden, Randbedingungen untersuchen zu können. Dadurch ist es beispielsweise möglich Fliehkrafteffekte bei einzelnen Bestandteilen der erfindungsgemäßen Vorrichtung in Abhängigkeit von verschiedenen statischen und/oder dynamischen Lasten und/oder unterschiedlichen Betriebstemperaturen zu untersuchen, wobei derartige Simulationsergebnisse in die Erstellung eines Dauerfestigkeitsnachweis einfließen können. Vorzugsweise werden die nach der Verarbeitung des Datenagglomerats in der Datenverarbeitungseinrichtung für die Simulationsumgebung erhaltenen Simulationsergebnisse gespeichert, um diese mit an einer real produzierten erfindungsgemäßen Vorrichtung und/oder an einem Prototyp der erfindungsgemäßen Vorrichtung ermittelten Messdaten zu vergleichen. Dadurch ist es möglich die Güte der mit Hilfe des Datenagglomerats erhaltenen Simulationsergebnisse zu beurteilen und/oder, insbesondere bei besonders starken Abweichungen, Messfehler und/oder eine fehlerhafte Messung zu identifizieren. Eine zerstörungsfreie Qualitätskontrolle der erfindungsgemäßen Vorrichtung ist dadurch vereinfacht und verbessert.

Durch das Datenagglomerat ist eine kostengünstige Herstellung von Prototypen und/oder computerbasierten Simulationen ermöglicht, um die Funktionsweise des Rotationskörpers und/oder des Haltewerkzeugs zu studieren, Probleme im konkreten Anwendungsfall zu identifizieren und Verbesserungen zu finden. Die Lösung der der Erfindung zugrunde liegenden Aufgabe kann mit Hilfe des Datenagglomerats leicht und kostengünstig überprüft werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische perspektivische Ansicht einer Windkraftanlage,
Fig. 2: eine schematische Schnittansicht einer Fluidübergabeeinrichtung für die Windkraftanlage aus Fig. 1,
Fig. 3: eine schematische Detailansicht der Fluidübergabeeinrichtung aus Fig. 2,
Fig. 4 eine schematische radiale Draufsicht auf eine erste Ausführungsform eines Stützrings der Fluidübergabeeinrichtung aus Fig. 2,
Fig. 5 eine schematische radiale Draufsicht au eine zweiten Ausführungsform eines Stützrings der Fluidübergabeeinrichtung aus Fig. 2,
Fig. 6 eine schematische radiale Draufsicht au eine dritten Ausführungsform eines Stützrings der Fluidübergabeeinrichtung aus Fig. 2,
Fig. 7: eine schematische perspektivische Ansicht einer Weiterbildung der in Fig. 4 bis Fig. 6 dargestellten Ausführungsformen des Stützrings und
Fig. 8: eine schematische Detailansicht einer alternativen Fluidübergabeeinrichtung für die Windkraftanlage aus Fig. 1.

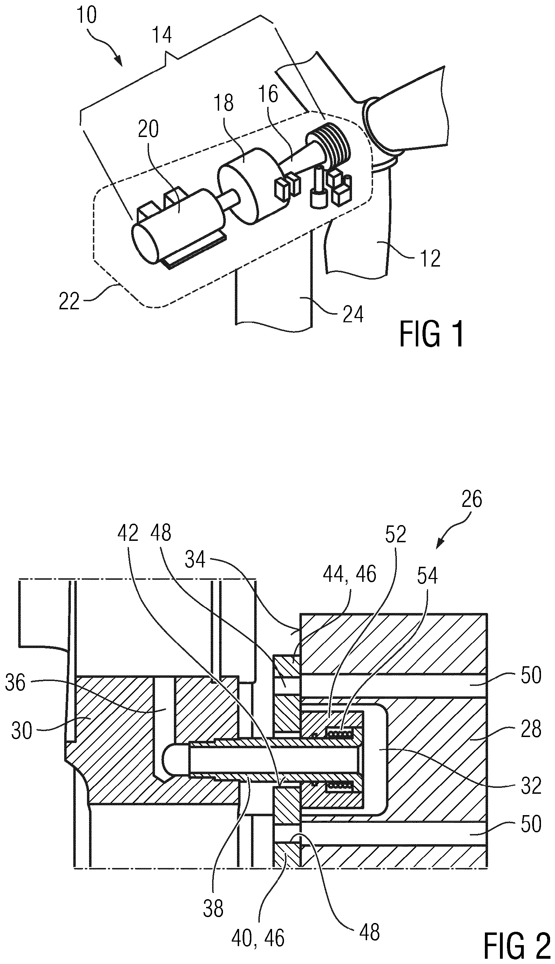

Die in Fig. 1 dargestellte Windkraftanlage 10 kann zur industriellen Erzeugung von elektrischer Energie aus Windkraft verwendet werden. Hierzu weist die Windkraftanlage 10 einen Rotor 12 auf, der durch Wind windkraftbetrieben in Drehung versetzt werden kann. Der Rotor 12 ist an einen Antriebsstrang 14 angekoppelt. Hierzu ist der Rotor 12 mit einer Rotorwelle 16 verbunden, die innerhalb des Antriebsstrangs 14 mit einem Getriebe 18 gekoppelt ist, um das über den Rotor 12 und die Rotorwelle 16 eingeleitete Drehmoment zu wandeln. Das in dem Getriebe 18 gewandelte Drehmoment wird einer im Generatormodus betriebenen elektrischen Maschine 20 zugeführt. Die von der elektrischen Maschine 20 erzeugte elektrische Energie kann einer wiederaufladbaren Batterie und/oder einem Stromnetz zugeführt werden. Der Antriebsstrang 14 ist im dargestellten Ausführungsbeispiel vollständig in einer Gondel 22 untergebracht, die an einem oberen freien Ende eines Standturms 24 angebracht ist.

Die in Fig. 2 dargestellte Fluidübergabeeinrichtung 26 kann insbesondere Teil des Getriebes 18 sein. Es ist aber auch möglich die Fluidübergabeeinrichtung 26 für ein anderes Getriebe, eine Industrieapplikation oder sonstigen Vorrichtung, in der zwischen relativ zueinander drehbaren Bauteilen ein Fluid übergeben werden soll, zu verwenden. In dem dargestellten Ausführungsbeispiel weist die Fluidübergabeeinrichtung 26 ein erstes Bauteil 28 auf, bei dem es sich um einen feststehenden Teil eines Gehäuses des Getriebes 18 handeln kann. Ein zweites Bauteil 30, bei dem es sich um einen Planetenträger einer Getriebestufe des Getriebes 18 handeln kann, kann relativ zu dem ersten Bauteil 28 drehen. In dem ersten Bauteil 28 ist eine in Umfangsrichtung geschlossen verlaufender Ringkammer 32 ausgebildet, die im Querschnitt im Wesentlichen U-förmig ausgeformt ist und zu einer Stirnseite 34 des ersten Bauteils 28 hin geöffnet ausgeführt ist. Der Ringkammer 32 kann über eine nicht dargestellte Fluidleitung ein Schmiermittel, insbesondere Schmieröl, zugeführt werden, das zu einer Schmierung und/oder Kühlung am zweiten Bauteil 30, insbesondere Lagerstellen und/oder Verzahnungseingriffe, an einen Fluidkanal 36 übergeben werden soll.

Mit dem zweiten Bauteil 30 ist ein Hohlstift 38 verschraubt, der einerseits mit dem Fluidkanal 36 des zweiten Bauteils 30 und andererseits mit der Ringkammer 32 der ersten Bauteils 28 fluidisch kommuniziert. Der Hohlstift 38 taucht hierzu in das Volumen der Ringkammer 32 ein. Eine aus einem inneren Ring 40 und über einen Zwischenraum 42 radial beabstandeten äußeren Ring 44 zusammengesetzte Abdeckung 46 kann einen Teil der Ringkammer 30 abdecken. Die Abdeckung 46, insbesondere sowohl der innere Ring 40 als auch der äußere Ring 44, weisen eine Befestigungsöffnung 48 mit Innengewinde auf, in das von einer Rückseite des ersten Bauteils 28 her eine Schraube durch eine zugehörige Bohrung 50 hindurch eingeschraubt werden kann, um die Abdeckung 46 mit dem ersten Bauteil 28 zu verschrauben. Die Bohrung 50 kann alternativ Teil eines abstehenden Flansches des ersten Bauteils 28 sein.

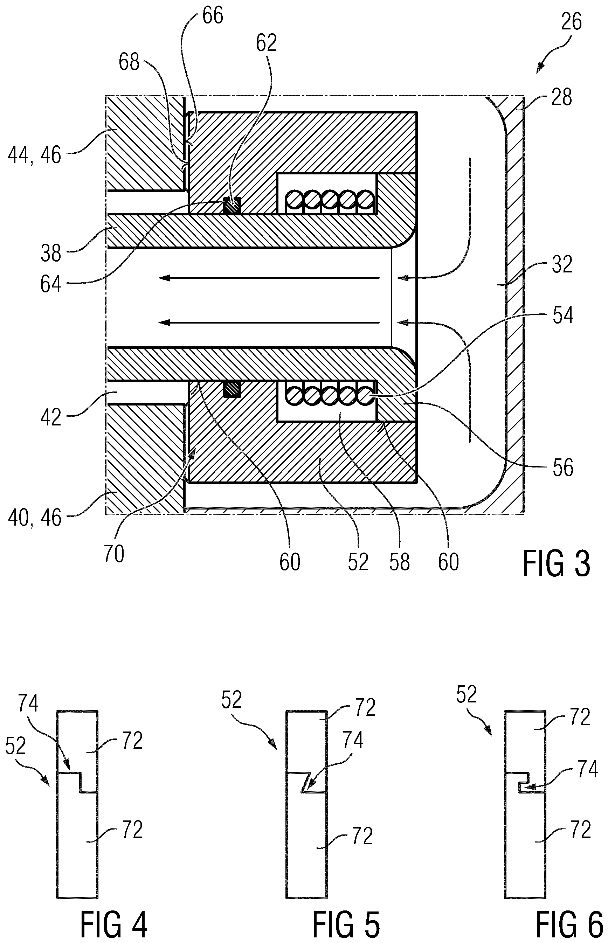

Die Abdeckung 46 kann insbesondere den durch den Zwischenraum 42 hindurchgeführten Hohlstift 38 in der Ringkammer 32 verliersicher zurückhalten. Hierzu ist ein Stützring 52 vorgesehen, der über ein Federelement 54 an dem Hohlstift 38 abgestützt und vorgespannt ist. Wie in Fig. 3 dargestellt ist, weist der Hohlstift an seinem in die Ringkammer eintauchenden Ende einen nach außen abstehenden Kragen 56, an dem das Federelement 54 abgestützt oder, beispielsweise durch Einhaken, befestigt ist. Der Stützring 52 kann den Kragen 56 an der zum zweiten Bauteil 30 weisenden Seite verliersicher hintergreifen. Hierbei kann zwischen dem Kragen 56 und dem hintergreifenden Teil des Stützrings 52 eine Aufnahmekammer 58 für das Federelement 54 freigelassen werden. Das Federelement 54 kann an dem hintergreifenden Teil des Stützrings 52 abgestützt oder, beispielsweise durch Einhaken, befestigt sein. In axialer Richtung außerhalb der Aufnahmekammer 58 kann zwischen dem Hohlstift 38 und dem Stützring 52 jeweils ein Ringspalt 60 ausgebildet sein, dessen Spalthöhe und axiale Erstreckung insbesondere derart dimensioniert ist, dass eine vordefinierte Winkelabweichung des Hohlstifts 38 relativ zum ersten Bauteil 28 und mittelbar auch zum Stützring 52 zugelassen werden kann, während vorzugsweise zumindest in einem der Ringspalte 60 eine Leckage von Schmiermittel in die Aufnahmekammer 58 und/oder aus der Ringkammer 32 heraus vermieden werden kann. Insbesondere ist es möglich in zumindest einem der Ringspalte 60 eine elastisch verformbare Ringdichtung 62 vorzusehen, die im dargestellten Ausführungsbeispiel in einer Dichtnut 64 des Stützrings 52 eingesetzt ist.

Der Stützring 52 kann von der Federkraft des Federelements 54 gegen die Abdeckung 46 gepresst werden, wodurch eine mittelbare Abstützung des Hohlstifts 38 an der Abdeckung 46 über das Federelement 54 und den Stützring 52 erreicht ist. Die Abdeckung 46 weist sowohl am inneren Ring 40 als auch am äußeren Ring 44 eine erste Gleitlagerfläche 66 auf, gegen die eine korrespondierende zweite Gleitlagerfläche 68 des Stützrings 52 angepresst ist. Die erste Gleitlagerfläche 66 und die angepresste zweite Gleitlagerfläche 68 bilden ein Axialgleitlager 70 aus, das einerseits eine gleitende Relativbewegung zulässt und andererseits, insbesondere durch eine bewusste Überdimensionierung der Gleitlagerflächen 66, 68 eine für das Schmiermittel fluiddichte Abdichtung ausbildet. Die Dichtwirkung des Axialgleitlagers 70 kann nicht nur über die Größe des Flächenkontakts, sondern auch über die Anpresskraft des Stützrings 52 beeinflusst werden, wobei die Anpresskraft des Stützrings 52 von der Federkraft und der Federkennlinie des Federelements 54 aber auch von dem Innendruck des Schmiermittels innerhalb der Ringkammer 32 abhängt. Die Dichtwirkung des Axialgleitlagers 70 ist dadurch abhängig von dem abzudichtenden Innendruck der Ringkammer 32 und daher selb stverstärkend.

Es können mehrere Hohlstifte 38 in Umfangsrichtung versetzt vorgesehen sein, die vorzugsweise in Umfangsrichtung gleichmäßig verteilt angeordnet sind. Es ist aber auch möglich zu dem dargestellten Hohlstift 38 versetzt ein, insbesondere als Entlastungsstift ausgestaltetes, Befestigungselement vorzusehen, das vorzugsweise die im Wesentlichen gleiche Außenkontur wie der Hohlstift 38 aufweist, um die Stabilität und Festigkeit zu erhöhen, wodurch insbesondere ein Abbrechen und/oder Abscheren des Hohlstifts 38 unter Last vermieden werden kann.

Der Stützring 52 kann insbesondere aus mehreren in Umfangsrichtung einander nachfolgenden Stützringsegmenten 72 zu einem Kreisring zusammengesetzt sein. Wie in Fig. 4, Fig. 5 und Fig. 6 dargestellt ist, kann zwischen den Tangentialseiten der Stützringsegmente 72 eine Dichtspaltschikane 74 ausgebildet werden, die eine ausreichende Abdichtung gegen eine Leckage des Schmiermittels ausbilden kann. Je nach zu erwartenden maximalen Innendruck in der Ringkammer 32 und/oder den Materialeigenschaften des Schmiermittels kann die Dichtspaltschikane 74 komplexer oder weniger komplex ausgestaltet sein, um eine ausreichende Dichtwirkung bereitstellen zu können. Zwischen der Abdeckung 46 und der Stirnseite 34 des ersten Bauteils kann ebenfalls eine nicht dargestellte Dichtung vorgesehen sein, falls die Anpresskraft und der Flächenkontakt der Abdeckung 46 an der Stirnseite 34 als nicht dicht genug befunden wird.

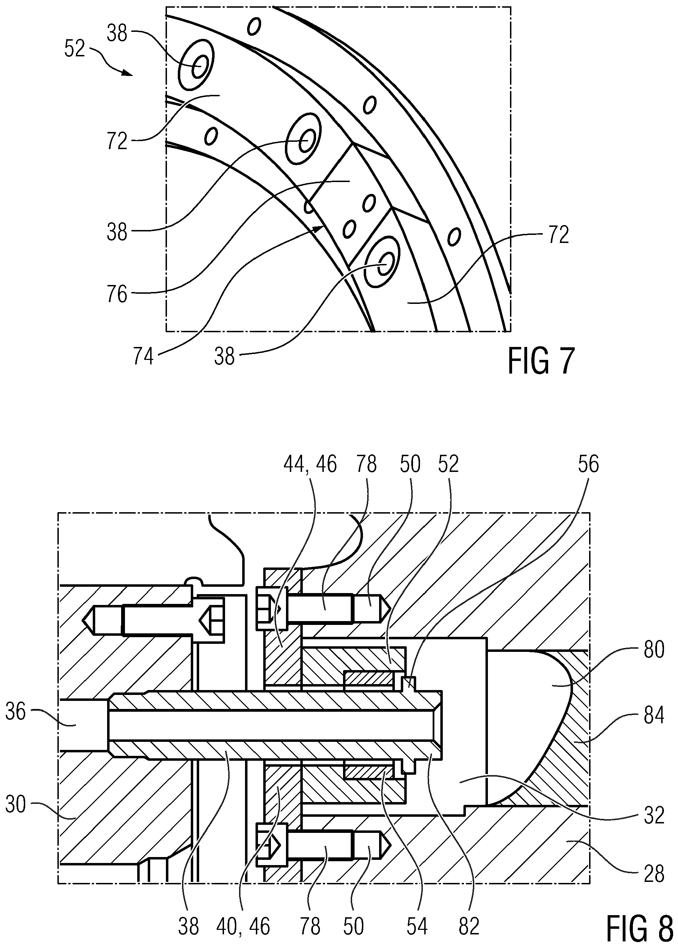

Bei der in Fig. 7 dargestellten Ausführungsform des Stützrings 52 ist die Dichtspaltschikane 74 des beispielsweise in Fig. 4, Fig. 5 oder Fig. 6 dargestellten Stützrings 52 von einem insbesondere im Wesentlichen U-förmigen Abdeckungselement 76 abgedeckt. Das Abdeckungselement 76 und die abzudeckende Dichtspaltschikane 74 sind insbesondere in Umfangsrichtung zu den Hohlstiften 38 und/oder Entlastungsstiften versetzt positioniert. Durch das Abdeckungselement 76 kann der Dichtspalt der Dichtspaltschikane 74 verlängert und die Dichtwirkung verbessert werden. Insbesondere ist das Abdeckungselement 76 mit einem Stützringsegment 72 oder mit beiden Stützringsegmenten 72 befestigt, wodurch die Stabilität des durch die mehreren Stützringsegmenten 72 zusammengesetzten Stützrings 52 verbessert ist.

Bei der in Fig. 8 dargestellten Ausführungsform der Fluidübergabeeinrichtung 26 ist im Vergleich zu der in Fig. 2 dargestellten Fluidübergabeeinrichtung 26 die Bohrung 50 nicht als Durchgangsbohrung, sondern als zum zweiten Bauteil 30 hin geöffnete Sacklochbohrung mit Innengewinde ausgestaltet. Die Abdeckung 46 kann über, insbesondere in das Material zumindest teilweise versenkte, Schrauben 78 mit den Bohrungen 50 verschraubt werden. Damit der Hohlstift 38 und/oder der Entlastungsstift mit dem zweiten Bauteil 28 verschraubt werden kann, kann das erste Bauteil 28 einen mit dem Ringkammer 32 kommunizierenden und in axialer Verlängerung des Hohlstifts 38 beziehungsweise des Entlastungsstifts vorgesehenen Durchgang 80 aufweisen, durch den ein Werkzeug hindurchgeführt werden kann. Das Werkzeug kann durch den Durchgang 80 hindurch an eine sich an dem Kragen 56 anschließende Kopfkontur 82, beispielsweise ein Sechskant, des Hohlstifts 38 beziehungsweise des Entlastungsstifts herangeführt werden, um den Hohlstift 38 beziehungsweise den Entlastungsstift zu verschrauben. Der Durchgang 80 kann nach dem Verschrauben mit einem Füllmaterial 84, beispielsweise ein Stopfen oder eine Vergussmasse, verschlossen und abgedichtet werden.

## Patentansprüche

1. Fluidübergabeeinrichtung (26) zur Übertragung eines Schmiermittels, insbesondere innerhalb eines Windkraftgetriebes (18) für eine industrielle Windkraftanlage (10), mit
einem ersten Bauteil (28),
einem relativ zu dem ersten Bauteil (28) drehbaren zweiten Bauteil (30),
einem an einer zum zweiten Bauteil (30) weisenden Stirnseite (34) des ersten Bauteils (28) ausgebildeten Ringkammer (32) zur Aufnahme des Schmiermittels,
mindestens einem mit dem zweiten Bauteil (30) verbundenen und in die Ringkammer (32) axial eintauchenden Hohlstift (38) zur fluidischen Kommunikation zwischen der Ringkammer (32) und einem Fluidkanal (36) des zweiten Bauteils (30), und
einer mit dem ersten Bauteil (28) verbundenen Abdeckung (46) zum verliersicheren Zurückhalten des Hohlstifts (38) in der Ringkammer (32),
wobei die Abdeckung (46) eine erste Gleitlagerfläche (66) ausbildet und der Hohlstift (38) über eine zweite Gleitlagerfläche (68) an der ersten Gleitlagerfläche (66) axial abgestützt ist.

2. Fluidübergabeeinrichtung (26) nach Anspruch 1, wobei die zweite Gleitlagerfläche (68) von einem axial relativ zum Hohlstift (38) beweglichen Stützring (52) ausgebildet ist, wobei der Stützring (52) über ein Federelement (54) mit dem Hohlstift (38) gekoppelt ist.

3. Fluidübergabeeinrichtung (26) nach Anspruch 2, wobei zwischen dem Stützring (52) und dem Hohlstift (38) eine von dem Stützring (52) und dem Hohlstift (38) verkapselte Aufnahmekammer (58) ausgebildet ist, wobei das Federelement (54) zumindest zu einem Großteil in der Aufnahmekammer (58) aufgenommen ist.

4. Fluidübergabeeinrichtung (26) nach Anspruch 2 oder 3, wobei der Stützring (52) eine Durchgangsöffnung für zumindest einen Teil des Hohlstifts (38) aufweist, wobei zwischen dem Stützring (52) und dem Hohlstift (38) mindestens ein axial verlaufender Ringspalt (60), vorzugsweise mindestens zwei axial zueinander beabstandete Ringspalte (60), ausgebildet ist, wobei insbesondere der Ringspalt (60) dimensioniert ist eine Winkelabweichung Δα des Hohlstifts (38) zuzulassen, wobei insbesondere 0,01° ≤ Δα ≤ 2,0°, vorzugsweise 0,02° ≤ Δα ≤ 1,0° und besonders bevorzugt 0,05° ≤ Δα ≤ 0,5° gilt.

5. Fluidübergabeeinrichtung (26) nach einem der Ansprüche 2 bis 4, wobei der Hohlstift (38) über eine in radialer Richtung elastisch verformbare Ringdichtung (62) oder Membran an dem Stützring (52) abgedichtet ist.

6. Fluidübergabeeinrichtung (26) nach einem der Ansprüche 2 bis 5, wobei der Stützring (52) aus mehreren in Umfangsrichtung einander nachfolgenden Stützringsegmenten (72) zusammengesetzt ist, wobei die Stützringsegmente (72) an ihren aufeinander zu weisenden Tangentialseiten eine Dichtspaltschikane (74), insbesondere Labyrinthdichtung, ausbilden.

7. Fluidübergabeeinrichtung (26) nach einem der Ansprüche 2 bis 6, wobei der Stützring (52) über mindestens ein Befestigungselement, insbesondere einem der Außenkontur des Hohlstifts (38) entsprechenden Entlastungsstift, mit dem zweiten Bauteil (28) befestigt und/oder translatorisch geführt ist.

8. Fluidübergabeeinrichtung (26) nach einem der Ansprüche 1 bis 7, wobei die Abdeckung (46) einen inneren Ring (40) und einen äußeren Ring (44) aufweist, wobei der Hohlstift (38) durch einen Zwischenraum (42) zwischen dem inneren Ring (40) und dem äußeren Ring (44) hindurchgeführt ist, wobei insbesondere eine im Zwischenraum (42) verbleibende Durchgangsfläche durch den Stützring (52) verschlossen ist.

9. Fluidübergabeeinrichtung (26) nach einem der Ansprüche 1 bis 8, wobei die Abdeckung (46) über ein Befestigungsmittel mit dem ersten Bauteil (28) befestigt ist, wobei das Befestigungsmittel, insbesondere Schraube, von einer von dem zweiten Bauteil (30) weg weisenden Axialseite durch eine Öffnung (50) des ersten Bauteils (28) hindurch bis zur Abdeckung (46) hindurchgeführt ist.

10. Fluidübergabeeinrichtung (26) nach einem der Ansprüche 1 bis 9, wobei die erste Gleitlagerfläche (66) und/oder die zweite Gleitlagerfläche (68) vollständig innerhalb des bis zur Stirnseite (34) des ersten Bauteils (28) reichenden Ringkammer (32) positioniert ist/sind.

11. Fluidübergabeeinrichtung (26) nach einem der Ansprüche 1 bis 10, wobei die Abdeckung (46) über einer Zentrierfase an der Ringkammer (32) zentriert ist.

12. Fluidübergabeeinrichtung (26) nach einem der Ansprüche 1 bis 11, wobei zwischen der Abdeckung (46) und der Stirnseite (34) des ersten Bauteils (28) eine Dichtung verpresst ist.

13. Windkraftgetriebe (18) für eine industrielle Windkraftanlage (10), mit einer als Planetengetriebe ausgestalteten Getriebestufe und einer Fluidübergabeeinrichtung (26) nach einem der Ansprüche 1 bis 12, wobei das zweite Bauteil (30) der Fluidübergabeeinrichtung (26) durch einen Planetenträger der Getriebestufe und das erste Bauteil (28) durch ein feststehendes Gehäuse oder ein rotierendes Getriebebauteil, insbesondere weiterer Planetenträger, einer in Kraftflussrichtung nachfolgenden weiteren Getriebestufe ausgebildet ist.

14. Antriebsstrang (14) für eine industrielle Windkraftanlage (10), mit einem Windkraftgetriebe (18) nach Anspruch 13 zur Leistungsübertragung entlang eines von einem windkraftgetriebenen Rotor (12) zu einem Generator (20) führenden Kraftfluss und einer Schmieranordnung zum Schmieren von Lagerstellen und/oder Zahneingriffen des Windkraftgetriebes (18), wobei eine Fließrichtung des von der Schmieranordnung über die Fluidübergabeeinrichtung (26) übergebenen Schmierstoffs entgegen der Kraftflussrichtung ausgerichtet ist.

15. Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Fluidübergabeeinrichtung (26) nach einem der Ansprüche 1 bis 12 vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile der Fluidübergabeeinrichtung (26), insbesondere durch 3D-Druck, durchzuführen
und/oder
bei einer Verarbeitung durch eine Datenverarbeitungseinrichtung zur Durchführung einer technischen Simulation eine Simulation der Funktionsweise der Fluidübergabeeinrichtung (26) durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen.
